# EUROPEAN PATENT APPLICATION

(11) **EP 3 732 991 A1**
(43) Date of publication of application: **04.11.2020**
(21) Application number: 18896937.2
(22) Date of filing: 26.12.2018
(51) Int. Cl.: A23L 2/00, A23L 2/38, A23L 2/52, A23L 2/56, A23L 33/105

(54) **BEVERAGE AND METHOD FOR PRODUCING SAME**

(30) Priority: 27.12.2017 JP 2017250945
(71) Applicant: Suntory Holdings Limited, Osaka 530-8203 (JP)
(72) Inventor: TAN Shoen, Fuchu-shi, Tokyo 183-8533 (JP); YOSHIDA Tomoko, Tokyo 135-8631 (JP)
(74) Representative: Vossius & Partner Patentanwälte Rechtsanwälte mbB
(86) International application number: PCT/JP2018/047708
(87) International publication number: WO 2019/131697

(57) **Abstract**

Provided are: a beverage which contains an increased amount of xanthohumols, in which an unfavorable sour after-taste specific to xanthohumol compounds including xanthohumol and isoxanthohumol is suppressed; and a method for producing the beverage. This beverage contains one or more compounds selected from xanthohumols, and an iso-α-acid, wherein the total content of the one or more compounds selected from xanthohumols is 3 ppm by mass or greater, and the content of the iso-α-acid is 0.5-80 mass ppm.

## Description

### TECHNICAL FIELD

The present invention relates to a beverage containing one or more types of compounds selected from xanthohumols and an iso-α-acid, and a method for producing the same.

### BACKGROUND ART

Xanthohumol is a prenylated flavonoid derived from hops which is known to have various physiological activities including an effect of suppressing growth of cancer cell, an antioxidant effect, an osteolysis suppressing effect and an antibacterial effect. Recent animal tests showed that xanthohumol has an effect of suppressing fat accumulation (Non-patent document 1: Phytochemistry. 91, Jul. 2013, 236, and Non-patent document 2: Arch Biochem Biophys. 599, Jun. 2016, 22), and thus xanthohumol is also receiving attention as a component useful for maintaining and improving health, for example, preventing or improving obesity by suppressing accumulation of fat. We found from our study that isoxanthohumol, which is obtained through isomerization of xanthohumol, shows an anti-obesity effect, an effect of suppressing fat accumulation, and an effect of preventing weight gain (Patent document 1: International Patent Application Publication WO2018/117041 (specification of Japanese Patent Application No. 2016-246974)).

In expectation of the effects of maintaining and improving health realized by the physiological activities of xanthohumol and isoxanthohumol, attempts have been made to increase the contents of these components in various beverages (Patent document 2: Japanese Patent Application Publication No. 2002-345433, and Patent document 3: Japanese Patent Application Publication No. 2003-310240). Xanthohumol and isoxanthohumol contents in beverages, however, are generally very small. Furthermore, since xanthohumol and isoxanthohumol have a distinctive unpleasant sour aftertaste, they have a problem of ruining the flavor inherent in the beverage when they are added in more than a certain amount.

### PRIOR ART DOCUMENTS

### Patent documents

Patent document 1: International Patent Application Publication WO2018/117041
Patent document 2: Japanese Patent Application Publication No. 2002-345433
Patent document 3: Japanese Patent Application Publication No. 2003-310240

### Non-patent documents

Non-patent document 1: Phytochemistry. 91, Jul. 2013, 236
Non-patent document 2: Arch Biochem Biophys. 599, Jun. 2016, 22

### SUMMARY OF INVENTION

### Problem to be Solved by the Invention

Under such circumstances, there has been a need for a beverage in which xanthohumol content is increased while suppressing unpleasant sour aftertaste distinctive of xanthohumol compounds including xanthohumol and isoxanthohumol, and a method for producing the same.

### Means for Solving the Problem

The present inventors have gone through intensive investigation to solve the above-described problem, and as a result of which found that addition of a predetermined amount of an iso-α-acid can mask the unpleasant sour aftertaste distinctive of xanthohumol compounds such as xanthohumol and isoxanthohumol, so that the content of the xanthohumol compounds in a beverage can be increased, thereby accomplishing the present invention. Since iso-α-acids have distinctive bitterness, the taste quality is likely to be worsen if it is combined with a xanthohumol compound that distinctively has an unpleasant sour aftertaste. For this reason, its effect of masking the unpleasant sour aftertaste distinctive of xanthohumol compounds was a surprise.

The present invention comprises the following aspects of the invention.
[1] A beverage comprising one or more types of compounds selected from xanthohumols and an iso-α-acid, wherein the total content of the one or more types of compounds selected from xanthohumols is 3 mass ppm or more while the content of the iso-α-acid is 0.5-80 mass ppm.
[2] The beverage according to [1], wherein the one or more types of compounds selected from xanthohumols are xanthohumol.
[3] The beverage according to [2], wherein the content of xanthohumol is 6-500 mass ppm.
[4] The beverage according to either one of [2] and [3], wherein the content of xanthohumol is 60-200 mass ppm.
[5] The beverage according to [1], wherein the one or more types of compounds selected from xanthohumols are isoxanthohumol.
[6] The beverage according to [5], wherein the content of isoxanthohumol is 6-500 mass ppm.
[7] The beverage according to either one of [5] and [6], wherein the content of isoxanthohumol is 60-200 mass ppm.
[8] The beverage according to any one of [1]-[4], which is an anti-obesity beverage.
[8-1] The beverage according to any one of [1]-[5], which is an anti-obesity beverage
[9] The beverage according to any one of [1]-[4], which is a fat accumulation suppressing beverage.
[9-1] The beverage according to any one of [1]-[6], which is a fat accumulation suppressing beverage.
[10] The beverage according to any one of [1]-[4], [8] and [9], which is a beer-taste beverage.
[10-1] The beverage according to any one of [1]-[7], [8-1] and [9-1], which is a beer-taste beverage.
[11] A method for producing the beverage according to any one of [1]-[4] and [8]-[10], the method comprising the steps of:
   adjusting the total content of xanthohumols in the beverage; and
   adjusting the content of the iso-α-acid in the beverage.
[11] A method for producing the beverage according to any one of [1]-[7], [8-1], [9-1] and [10-1], the method comprising the steps of:
   adjusting the total content of xanthohumols in the beverage; and
   adjusting the content of the iso-α-acid in the beverage.

### EFFECT OF THE INVENTION

According to the present invention, the unpleasant sour aftertaste distinctive of a xanthohumol compound such as xanthohumol or isoxanthohumol can be masked by adjusting the content of the iso-α-acid to lie in a predetermined range, and thus the content of the xanthohumol compound in a beverage can be increased as compared to conventional beverages.

### BRIEF DESCRIPTION OF THE DRAWINGS

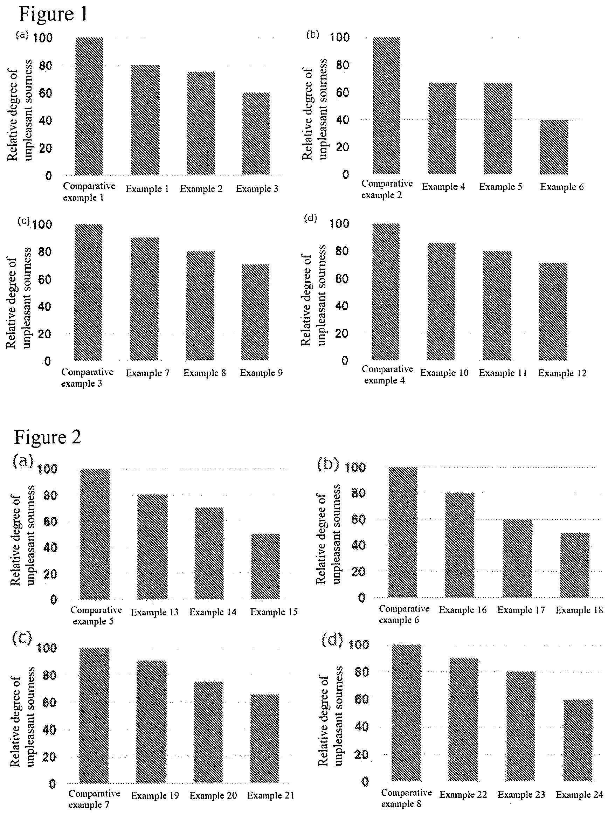

[Figure 1] Charts showing effects of improving unpleasant sourness in respective examples. Figure 1(a) shows the degree of unpleasant sourness relative to Comparative example 1, Figure 1(b) shows the degree of unpleasant sourness relative to Comparative example 2, Figure 1(c) shows the degree of unpleasant sourness relative to Comparative example 3, and Figure 1(d) shows the degree of unpleasant sourness relative to Comparative example 4. Smaller degree means that the sourness was more reduced and thus the effect of reducing the sourness was higher relative to the comparative example.
[Figure 2] Charts showing effects of improving unpleasant sourness in respective examples. Figure 2(a) shows the degree of unpleasant sourness relative to Comparative example 5, Figure 2(b) shows the degree of unpleasant sourness relative to Comparative example 6, Figure 2(c) shows the degree of unpleasant sourness relative to Comparative example 7, and Figure 2(d) shows the degree of unpleasant sourness relative to Comparative example 8. Smaller degree means that the sourness was more reduced and thus the effect of reducing the sourness was higher relative to the comparative example.

### MODES FOR CARRYING OUT THE INVENTION

Hereinafter, a beverage of the present invention and a method for producing the same will be described in detail.

### 1. Beverage

A beverage of the present invention comprises one or more types of compounds selected from xanthohumols and an iso-α-acid, wherein the total content of the one or more types of compounds selected from xanthohumols is 3 mass ppm or more while the content of the iso-α-acid is 0.5-80 mass ppm.

In the beverage of the present invention, unpleasant sour aftertaste distinctive of xanthohumol compounds such as xanthohumol and isoxanthohumol can be masked by adjusting the content of the iso-α-acid to lie in a predetermined range, and thus the content of the xanthohumol compound can be increased in the beverage as compared to conventional products. In a preferred aspect of the present invention, maintenance and improvement of health can be expected by continuously drinking the beverage of the present invention owing to the physiological activities exerted by the xanthohumol compound (for example, xanthohumol or isoxanthohumol).

The beverage of the present invention comprises one or more types of compounds selected from xanthohumols, where examples of the xanthohumol compound include xanthohumol, isoxanthohumol, 6-prenylnaringenin and 8-prenylnaringenin. In one aspect of the present invention, the one or more types of compounds selected from xanthohumols are xanthohumol.

Xanthohumol is a component derived from hops, which can be extracted from hops by using a solvent. For example, dried hops pelletized by pulverization of the like are subjected to extraction by immersing in an organic solvent such as alcohol. Subsequently, the resulting extract is concentrated and dried and then separated/purified by chromatography or the like, thereby obtaining xanthohumol.

Isoxanthohumol can be obtained by isomerizing xanthohumol. For example, xanthohumol dissolved in a water-containing ethanol solution can be boiled at 100°C for 12 hours or longer to isomerize xanthohumol, thereby obtaining a reaction solution containing isoxanthohumol. At end of the reaction, the resulting reaction solution can be lyophilized to obtain isoxanthohumol powder. Alternatively, xanthohumol dissolved in a phosphate buffer (pH 6) can be boiled at 100°C for 3-4 hours to isomerize xanthohumol, thereby obtaining a reaction solution containing isoxanthohumol. The resulting reaction solution can be subjected to extraction using an organic solvent such as ether. Subsequently, the resulting extract is concentrated and dried and then separated/purified by chromatography or the like, thereby obtaining isoxanthohumol.

While xanthohumol or isoxanthohumol used for the present invention is preferably derived from hops, they may also be obtained through organic synthesis. In this regard, xanthohumol and isoxanthohumol are also commercially available.

According to one embodiment of the beverage of the present invention, the total content of the one or more types of compounds selected from xanthohumols is 3 mass ppm or more, preferably 6 mass ppm or more, more preferably 30 mass ppm or more, and still more preferably 60 mass ppm or more. According to another embodiment of the beverage of the present invention, the total content of the one or more types of compounds selected from xanthohumols is preferably 6-500 mass ppm, more preferably 30-400 mass ppm and still more preferably 60-200 mass ppm. The content of xanthohumol compounds can be measured, for example, by using LC-MS/MS system (TSQ Quantiva, Thermo Fisher Scientific).

According to one embodiment of the beverage of the present invention, the content of xanthohumol is 3 mass ppm or more, preferably 6 mass ppm or more, more preferably 30 mass ppm or more, and still more preferably 60 mass ppm or more. According to another embodiment of the beverage of the present invention, the content of xanthohumol is preferably 6-500 mass ppm, more preferably 30-400 mass ppm, and still more preferably 60-200 mass ppm.

Moreover, according to another embodiment of the beverage of the present invention, the content of isoxanthohumol is 3 mass ppm or more, preferably 6 mass ppm or more, more preferably 30 mass ppm or more and still more preferably 60 mass ppm or more. According to another embodiment of the beverage of the present invention, the content of isoxanthohumol is preferably 6-500 mass ppm, more preferably 30-400 mass ppm, and still more preferably 60-200 mass ppm.

As long as the contents of xanthohumol and isoxanthohumol lie within the above-mentioned range, xanthohumol and isoxanthohumol are more likely to effectively exert their physiological activities in the beverage. In particular, while xanthohumol and isoxanthohumol are more likely to exert their physiological activities when used in larger contents, from the viewpoint of retaining the flavor inherent in the beverage, the total content of the one or more types of compounds selected from xanthohumols in the beverage of the present invention is preferably 500 mass ppm or less, and more preferably 200 mass ppm or less.

The beverage of the present invention may contain a compound selected from xanthohumols (e.g., xanthohumol and isoxanthohumol) alone, or may contain different types of compounds selected from xanthohumols.

If the beverage of the present invention is to contain isoxanthohumol as the xanthohumol compound, isoxanthohumol may be added directly to the beverage, or xanthohumol may be partially changed into isoxanthohumol.

Herein, the term "contain" may mean either dissolution in the beverage or suspension in the beverage.

The preferable content of a xanthohumol compound can suitably be adjusted according to the type and purpose of the beverage.

According to the present invention, the total content of the xanthohumol compounds can be adjusted by separately adding xanthohumol compounds such as xanthohumol or isoxanthohumol to the beverage. If a beverage used as the base of the beverage of the present invention essentially contains one or more types of xanthohumol compounds, the total amount of these components may be adjusted to lie in the above-mentioned range.

The iso-α-acid used in the present invention is not particularly limited as long as it is a substance that can be used in a beverage. The iso-α-acid is an isomerized alpha acid, which is a bitter component derived from hops, a material mainly used in producing a beer-taste beverage. The iso-α-acid used in the present invention may be an extract from hops or a commercially available iso-α-acid formulation. An iso-α-acid can be extracted from hops by means of a known method. Furthermore, a combination of an extract from hops and a commercially available iso-α-acid formulation can also be used as the iso-α-acid.

The content of the iso-α-acid in the beverage of the present invention is 0.5-80 mass ppm, preferably 1.0-70 mass ppm, and more preferably 1.0-65 mass ppm. As long as the content of the iso-α-acid lies in the above-mentioned range, the unpleasant sour aftertaste distinctive of xanthohumol compounds such as xanthohumol and isoxanthohumol can be suppressed. The content of the iso-α-acid in the beverage can be measured according to Method 7.7 of "Analytica-EBC" (standard analysis methods) published by EBC (European Brewery Convention).

A beverage used as the base of the beverage of the present invention is not particularly limited as long as a xanthohumol compound and an iso-α-acid can be blended therewith. For example, it may be an alcoholic beverage or a non-alcoholic beverage. Moreover, the beverage used as the base of the beverage of the present invention also includes an alcoholic beverage obtained by adding an alcohol to a beverage used as the base.

The alcohol contained in an alcoholic beverage is not particularly limited as long as it is drinkable as a general alcoholic drink. For example, a distilled alcoholic beverage such as whiskey, vodka, rum, *shochu* (Japanese distilled liquor) or a spirit, or a mixed liquor such as a liqueur can be used. Either a single type of alcohol or a different types of alcohols may be used. While the alcohol concentration of the alcoholic beverage is not particularly limited, it is preferably 1-15 vol% and more preferably 2-9 vol%.

A non-alcoholic beverage is not particularly limited as long as it is a beverage with an ethanol content of less than 1.00 vol%, where examples thereof include non-alcoholic beer-taste beverages, carbonated drinks, fruit juice drinks, soft drinks and energy drinks.

In the beverage of the present invention, the total content of the xanthohumol compounds and the content of the iso-α-acid can suitably be adjusted in accordance with the type and the purpose of the beverage.

For example, if the beverage of the present invention is a beer-taste beverage (a beer-taste beverage containing a fermented or non-fermented alcohol, a non-alcoholic beer-taste beverage or a beer-taste soft drink), the total content of the one or more types of compounds selected from xanthohumols is 3 mass ppm or more, preferably 6 mass ppm or more, more preferably 30 mass ppm or more, and still more preferably 60 mass ppm or more. According to another embodiment of the beverage of the present invention, the total content of the one or more types of compounds selected from xanthohumols is preferably 6-500 mass ppm, more preferably 30-400 mass ppm, and still more preferably 60-200 mass ppm. The content of the iso-α-acid is adjusted to be 0.5-80 mass ppm, preferably 1.0-70 mass ppm, and more preferably 1.0-65 mass ppm. The term "beer-taste beverage" as used herein refers to a carbonated drink that has a beer-like flavor. An "unfermented beer-taste beverage" refers to a beer-taste beverage that is produced without a fermentation step using yeast, whereas a "fermented beer-taste beverage" refers to a beer-taste beverage that is produced through a fermentation step using yeast.

According to one embodiment of the present invention, the beverage of the present invention is preferably a beer-taste beverage. A beer-taste beverage may be either a non-alcoholic beverage or an alcoholic beverage containing alcohol, or may be a beer-taste soft drink. Furthermore, a beer-taste beverage may be either a fermented beer-taste beverage or an unfermented beer-taste beverage.

According to another embodiment the present invention, the beverage of the present invention may contain carbon dioxide gas to give a carbonated drink. The present invention can be applied to a carbonated drink to improve the drawback of a beverage containing a bitter substance and citric acid and/or malic acid in terms of taste, as well as to suitably alleviate the stimulation caused by carbon dioxide gas. Therefore, a carbonated drink is one of the more preferred aspects of the present invention.

Carbon dioxide gas can be provided in a beverage according to a method generally known to those skilled in the art. For example, but without limitation, carbon dioxide may be dissolved in the beverage under pressure or carbon dioxide can be mixed with the beverage in a piping using a mixer such as a carbonator from Tuchenhargen. Alternatively, beverage may be sprayed in a tank filled with carbon dioxide so as to let the beverage absorb carbon dioxide, or the beverage may be mixed with carbonated water. These means can appropriately be employed to adjust the pressure of the carbon dioxide gas.

If the beverage of the present invention is a carbonated drink, it has a carbon dioxide gas pressure of preferably 1.0-3.5 kg/cm², and more preferably 1.2-2.5 kg/cm². The carbon dioxide gas pressure can be measured using a gas volume meter GVA-500A available from Kyoto Electronics Manufacturing Co., Ltd. For example, a carbon dioxide gas pressure can be measured at a sample temperature of 20°C after degassing (snifting) and shaking the container in the gas volume meter.

The total content of the xanthohumol compounds having various physiological activities such as xanthohumol and isoxanthohumol can be made high in the beverage of the present invention while suppressing the associated unpleasant sour aftertaste. Therefore, one can continuously drink the beverage of the present invention without undue stress, and thus various effects can be expected.

In particular, xanthohumol is known to have an effect of suppressing fat accumulation (see Non-patent documents 1 and 2), and is known to have an effect of preventing or improving obesity by suppressing fat accumulation. Moreover, isoxanthohumol is known to have an anti-obesity effect, a fat accumulation suppressing effect and a weight gain preventing effect (see Patent document 1). Accordingly, in a preferred aspect of the present invention, the beverage of the present invention can be used as an anti-obesity beverage and further as a fat accumulation suppressing beverage. By continuously drinking the beverage of the present invention, accumulation of fat in the body due to daily diet can be suppressed and thus effects of maintaining and improving health can be expected.

While pH of the beverage of the present invention is not particularly limited, it is preferably in a range of 2-8.

If necessary, various additives may be added to the beverage of the present invention as long as the effect of the present invention is not impaired. For example, a coloring, a foaming agent, a flavoring agent, a bittering agent, a sweetener, a protein-based substance such as a peptide-containing substance, seasonings such as an amino acid, an antioxidant such as ascorbic acid, an acidulant, an alcohol or the like may be added as necessary as long as the effect of the present invention is not impaired.

### 2. Method for producing beverage

A beverage of the present invention can be produced by adjusting the content of xanthohumol and isoxanthohumol as well as the content of the iso-α-acid to lie in respective predetermined ranges. Specifically, a method for producing a beverage of the present invention comprises the steps of: adjusting the total content of the xanthohumol compounds in the beverage; and adjusting the content of the iso-α-acid in the beverage.

According to the production method of the present invention, the total content of the xanthohumol compounds can be adjusted either during or after the production of the beverage. For example, adjustment may be carried out before, during or after any of the production steps, or before, during or after multiple steps, as long as the total content of the xanthohumol compounds in the resulting beverage lies in the predetermined range.

For example, in a case where a beer or a fermented beer-taste beverage, i.e., a fermented malt beverage such as a low-malt beer, is to be produced, the method comprises: a saccharification step for converting the raw material containing malt into sugar; a filtration step for filtrating the mash to obtain wort; a boiling step for adding hops to the wort and boiling the resultant; a separation step for separating sediment from the hot wort after the boiling step; a fermentation step for adding yeast to the wort to allow the wort to ferment; and a filtration step for filtrating the fermented liquid. Since xanthohumol is isomerized and changes into isoxanthohumol by undergoing heat at about 96°C, the content of xanthohumol is preferably adjusted anytime after the boiling step. Meanwhile, since isoxanthohumol is stable to heat, the content of isoxanthohumol can be adjusted at any point.

The same also applies to production of other fermented beverages, and therefore the content of isoxanthohumol can be adjusted at any timing whereas the content of xanthohumol is preferably adjusted anytime after a step involving heat, if any.

In terms of yield, the xanthohumol content and the isoxanthohumol content are preferably adjusted as later as possible. Moreover, in any case, the total content of the xanthohumol compounds should lie in the predetermined range.

Furthermore, in a case where an unfermented beer-taste beverage is to be produced, the method comprises: a saccharification step for converting the raw material containing malt into sugar; a filtration step for filtrating the mash to obtain wort; a boiling step for adding hops to the wort and boiling the resultant; a separation step for separating sediment from the hot wort after the boiling step; a filtration step for filtrating the resulting separated liquid; and a product preparation step for adding degassed water, carbon dioxide gas, seasoning ingredients and, if necessary, alcohol to the filtrated liquid.

In order to produce an unfermented beer-taste beverage by using malt as a raw material, first, an enzyme suitable for the need such as amylase is added to a mixture containing raw materials, namely, barley such as malt, and, if necessary, other grains, starch, sugar, a bittering agent or a coloring and water to allow gelatinization and saccharification. The resultant is filtrated to obtain mash. In accordance with the need, hops, a bittering agent and the like are added to the mash, and the resultant is boiled. Solid matter such as coagulated protein is removed in a clarification tank. An alternative to this mash may be obtained by adding hops to a mixture of malt extract and warm water, and boiling the resultant. Hops may be blended at any point from the beginning to the end of the boiling. Any known conditions for the saccharification step, the boiling step and the solid matter removing step can be employed. After boiling, the resulting wort is filtrated, and water, carbon dioxide gas, seasoning ingredients and, if necessary, alcohol can be added to the filtrated liquid to give an unfermented beer-taste beverage. In order to acquire more favorable flavor as a beer-taste beverage, aroma ingredients such as fatty acid ester, ethyl acetate or isoamyl acetate may be added in any of the above-described steps prior to packing.

Alternatively, in order to produce an unfermented beer-taste beverage that does not use malt as a raw material, first, liquid sugar containing a carbon source, a nitrogen source as an amino-acid-containing material other than barley or malt, hops, pigment and the like are mixed with warm water to obtain a sugar solution. This sugar solution is boiled. If hops are used as a raw material, they may be mixed with the sugar solution during boiling rather than prior to boiling. Water, carbon dioxide gas, seasoning ingredients and, if necessary, alcohol may be added to the boiled sugar solution to obtain an unfermented beer-taste beverage. In order to acquire more favorable flavor as a beer-taste beverage, aroma ingredients such as fatty acid ester, ethyl acetate or isoamyl acetate may be added in any of the above-described steps prior to packing.

Since xanthohumol is isomerized and changes into isoxanthohumol by undergoing heat at about 96°C, the content of xanthohumol is preferably adjusted anytime after the boiling step. Meanwhile, since isoxanthohumol is stable to heat, the content of isoxanthohumol can be adjusted at any point.

The same also applies to production of other beverages, and therefore the content of isoxanthohumol can be adjusted at any timing whereas the content of xanthohumol is preferably adjusted anytime after a step involving heat, if any.

In terms of yield, the xanthohumol content and the isoxanthohumol content are preferably adjusted as later as possible. Moreover, in any case, the total content of the xanthohumol compounds should lie in the predetermined range.

The production method of the present invention comprises a step of adjusting the iso-α-acid content in the beverage to be 0.5-80 mass ppm.

The content of iso-α-acid can be adjusted either during or after the production of the beverage. For example, adjustment may be carried out before, during or after any of the production steps, or before, during or after multiple steps, as long as the total content of the iso-α-acid in the resulting beverage lies in the predetermined range.

According to the production method of the present invention, the order of the adjustment steps is not particularly limited and two or more adjustment steps can be carried out at the same time.

### 3. Container-packed beverage

The beer-taste beverage of the present invention can be packed and sealed in a container to be provided as a container-packed beverage. A container made from any material in any form can be used. Any container generally used for beverage compositions, for example, a resin container such as a PET bottle, a paper container such as a paper package, a glass container such as a glass bottle, a metal container such as an aluminum can or a steel can, an aluminum pouch or the like can be used.

### EXAMPLES

Hereinafter, the present invention will be described in more detail by way of examples, although the present invention is not limited to these examples.

### <Preparation of xanthohumol>

A xanthohumol subjected to the preparations of the beer-taste beverages of Examples 1-12 and Comparative examples 1-4 was Xantho-Flav Pure (available from Hopsteiner).

### <Preparation of beer-taste beverages>

### Examples 1-12 and Comparative examples 1-4

Beer-taste beverages were prepared as follows. 20 kg of malt was pulverized into a suitable grain size and placed into a preparation tank, to which 120 L of warm water was added to prepare the mash at about 50°C. After keeping the mash at 50°C for 30 minutes, the temperature was gradually raised to allow saccharification at 65°C-72°C for 60 minutes. The temperature of the mash that completed the saccharification was raised to 77°C, and then the mash was transferred to and filtrated in a wort filtrating tank, where a filtrate was obtained.

Warm water was added to a part of the resulting filtrate. In doing so, the mixing proportion of the filtrate and warm water was adjusted such that the total amount of the extract at the end of boiling was about 4.0 wt%. In a production scale of 100 L, about 40 g of a commercially available caramel pigment (Class I) was added and the resultant was boiled at 100°C for 80 minutes. Sediments were removed from the boiled solution and the resultant was cooled to about 2°C.

A part of the cooled solution was diluted in a suitable amount of cool water such that the total amount of the extract in the final product was 0.3 wt%. Using lactic acid as a pH controller, suitable amounts of the pH controller, an antioxidant, a flavoring agent and carbon dioxide gas were added to the diluted fluid, and the resultant was subjected to filtration. Thereafter, xanthohumol and an iso-α-acid were added to the concentrations indicated in Table 1 to give the beer-taste beverages of Examples 1-12 and Comparative examples 1-4. The xanthohumol content was measured using LC-MS/MS system (TSQ Quantiva, Thermo Fisher Scientific) while the iso-α-acid content was measured according to Method 7.7 of "Analytica-EBC" (standard analysis methods) published by EBC (European Brewery Convention).

For the respective beer-taste beverages, sensory evaluation (relative degree of unpleasant sourness) was conducted by five trained panelists based on the following criteria to determine the median of the evaluation scores. The results are shown in Table 2 and Figure 1.

### (Evaluation of relative degree of unpleasant sourness)

Provided that unpleasant sourness of each of the comparative examples was 100, the degree of unpleasant sourness was evaluated relative thereto.

**[Table 1]**

| Table 1 | Comparative example 1 | Example 1 | Example 2 | Example 3 | Comparative example 2 | Example 4 | Example 5 | Example 6 | Comparative example 3 | Example 7 | Example 8 | Example 9 | Comparative example 4 | Example 10 | Example 11 | Example 12 |
|---|---|---|---|---|---|---|---|---|---|---|---|---|---|---|---|---|
| Mixing amount of xanthohumol (mg/L) | 6 | 6 | 6 | 6 | 60 | 60 | 60 | 60 | 200 | 200 | 200 | 200 | 500 | 500 | 500 | 500 |
| Mixing amount of iso-α-acid (mg/L) | 0 | 1 | 25 | 65 | 0 | 1 | 25 | 65 | 0 | 1 | 25 | 65 | 0 | 1 | 25 | 65 |

**[Table 2]**

| Table 2 | Comparative example 1 | Example 1 | Example 2 | Example 3 | Comparative example 2 | Example 4 | Example 5 | Example 6 | Comparative example 3 | Example 7 | Example 8 | Example 9 | Comparative example 4 | Example 10 | Example 11 | Example 12 |
|---|---|---|---|---|---|---|---|---|---|---|---|---|---|---|---|---|
| Mixing amount of xanthohumol (mg/L) | 6 | 6 | 6 | 6 | 60 | 60 | 60 | 60 | 200 | 200 | 200 | 200 | 500 | 500 | 500 | 500 |
| Mixing amount of iso-α-acid (mg/L) | 0 | 1 | 25 | 65 | 0 | 1 | 25 | 65 | 0 | 1 | 25 | 65 | 0 | 1 | 25 | 65 |
| Relative degree of unpleasant sourness (Median of evaluation scores by 5 panelists) | 100 | 80 | 78 | 60 | 100 | 67 | 67 | 40 | 100 | 90 | 80 | 70 | 100 | 86 | 80 | 71 |
| | | Improvement relative to Comparative example 1 | | | | Improvement relative to Comparative example 2 | | | | Improvement relative to Comparative example 3 | | | | Improvement relative to Comparative example 4 | | |

As can be appreciated from the results shown above, the unpleasant sourness distinctive to xanthohumol was found to be improved by adjusting the iso-α-acid content in the beer-taste beverages to lie in the predetermined range.

### <Preparation of isoxanthohumol>

As isoxanthohumol subjected to preparations of beer-taste beverages of Examples 13-24 and Comparative examples 5-8, Iso-Xantho-Flav (available from Hopsteiner) was used.

### <Preparation of beer-taste beverages>

### Examples 13-24 and Comparative examples 5-8

Beer-taste beverages were prepared as follows. 20 kg of malt was pulverized into a suitable grain size and placed into a preparation tank, to which 120 L of warm water was added to prepare the mash at about 50°C. After keeping the mash at 50°C for 30 minutes, the temperature was gradually raised to allow saccharification at 65°C-72°C for 60 minutes. The temperature of the mash that completed the saccharification was raised to 77°C, and then the mash was transferred to and filtrated in a wort filtrating tank, where a filtrate was obtained.

Warm water was added to a part of the resulting filtrate. In doing so, the mixing proportion of the filtrate and warm water was adjusted such that the total amount of the extract at the end of boiling was about 4.0 wt%. In a production scale of 100 L, about 40 g of a commercially available caramel pigment (Class I) was added and the resultant was boiled at 100°C for 80 minutes. Sediments were removed from the boiled solution and the resultant was cooled to about 2°C.

A part of the cooled solution was diluted in a suitable amount of cool water such that the total amount of the extract in the final product was 0.3 wt%. Using lactic acid as a pH controller, suitable amounts of the pH controller, an antioxidant, a flavoring agent and carbon dioxide gas were added to the diluted fluid, and the resultant was subjected to filtration. Thereafter, isoxanthohumol and an iso-α-acid were added to the concentrations indicated in Table 3 to give the beer-taste beverages of Examples 13-24 and Comparative examples 5-8. The isoxanthohumol content was measured using LC-MS/MS system (TSQ Quantiva, Thermo Fisher Scientific) while the iso-α-acid content was measured according to Method 7.7 of "Analytica-EBC" (standard analysis methods) published by EBC (European Brewery Convention).

For the respective beer-taste beverages, sensory evaluation (relative degree of unpleasant sourness) was conducted by five trained panelists based on the following criteria to determine the median of the evaluation scores. The results are shown in Table 4 and Figure 2.

### (Evaluation of relative degree of unpleasant sourness)

Provided that unpleasant sourness of each of the comparative examples was 100, the degree of unpleasant sourness was evaluated relative thereto.

### [Table 3]

**Table 3**

| | Comparative example 5 | Example 13 | Example 14 | Example 15 | Comparative example 6 | Example 16 | Example 17 | Example 18 | Comparative example 7 | Example 19 | Example 20 | Example 21 | Comparative example 8 | Example 22 | Example 23 | Example 24 |
|---|---|---|---|---|---|---|---|---|---|---|---|---|---|---|---|---|
| Mixing amount of xanthohumol (mg/L) | 6 | | | | 60 | | | | 200 | | | | 500 | | | |
| Mixing amount of iso-α-acid (mg/L) | 0 | 1 | 25 | 65 | 0 | 1 | 25 | 65 | 0 | 1 | 25 | 65 | 0 | 1 | 25 | 65 |

### [Table 4]

**Table 4**

| | Comparative example 5 | Example 13 | Example 14 | Example 15 | Comparative example 6 | Example 16 | Example 17 | Example 18 | Comparative example 7 | Example 19 | Example 20 | Example 21 | Comparative example 8 | Example 22 | Example 23 | Example 24 |
|---|---|---|---|---|---|---|---|---|---|---|---|---|---|---|---|---|
| Mixing amount of xanthohumol (mg/L) | 6 | | | | 60 | | | | 200 | | | | 500 | | | |
| Mixing | 0 | 1 | 25 | 65 | 0 | 1 | 25 | 65 | 0 | 1 | 25 | 65 | 0 | 1 | 25 | 65 |
| amount of iso-α-acid (mg/L) | | | | | | | | | | | | | | | | |
| Relative degree of unpleasant sourness (Median of evaluation scores by 5 panelists) | 100 | 80 | 70 | 50 | 100 | 80 | 60 | 50 | 100 | 90 | 75 | 65 | 100 | 90 | 80 | 60 |
| | | Improvement relative to Comparative example 5 | | | | Improvement relative to Comparative example 6 | | | | Improvement relative to Comparative example 7 | | | | Improvement relative to Comparative example 8 | | |

As can be appreciated from the results shown above, the unpleasant sourness distinctive to isoxanthohumol was found to be improved by adjusting the iso-α-acid content in the beer-taste beverages to lie in the predetermined range.

### INDUSTRIAL APPLICABILITY

According to the present invention, the content of an iso-α-acid can be adjusted to lie in a predetermined range to suppress unpleasant sour aftertaste distinctive to a xanthohumol compound so that the content of the xanthohumol compound can be increased. In a preferred aspect of the present invention, maintenance and improvement of health can be expected by continuously drinking the beverage of the present invention owing to the physiological activities exerted by the xanthohumol compound.

## Claims

1. A beverage comprising one or more types of compounds selected from xanthohumols and an iso-α-acid, wherein the total content of the one or more types of compounds selected from xanthohumols is 3 mass ppm or more while the content of the iso-α-acid is 0.5-80 mass ppm.

2. The beverage according to Claim 1, wherein the one or more types of compounds selected from xanthohumols are xanthohumol.

3. The beverage according to Claim 2, wherein the content of xanthohumol is 6-500 mass ppm.

4. The beverage according to either one of Claims 2 and 3, wherein the content of xanthohumol is 60-200 mass ppm.

5. The beverage according to Claim 1, wherein the one or more types of compounds selected from xanthohumols are isoxanthohumol.

6. The beverage according to Claim 5, wherein the content of isoxanthohumol is 6-500 mass ppm.

7. The beverage according to either one of Claims 5 and 6, wherein the content of isoxanthohumol is 60-200 mass ppm.

8. The beverage according to any one of Claims 1-7, which is an anti-obesity beverage.

9. The beverage according to any one of Claims 1-7, which is a fat accumulation suppressing beverage.

10. The beverage according to any one of Claims 1-9, which is a beer-taste beverage.

11. A method for producing the beverage according to any one of Claims 1-10, the method comprising the steps of:
adjusting the total content of xanthohumols in the beverage; and
adjusting the content of the iso-α-acid in the beverage.
